# FASCICULE DE BREVET EUROPEEN

(11) **EP 2 501 457 B1**
(45) Date de publication et mention de la délivrance du brevet: **27.09.2017**
(21) Numéro de dépôt: 10777026.5
(22) Date de dépôt: 17.11.2010
(51) Int. Cl.: B01D 47/12, B82Y 15/00, B82Y 40/00, B01D 47/06, B01D 47/02

(54) **DISPOSITIF DE RECUPERATION DE NANOPOUDRES ET DE POUDRES ULTRAFINES CONTENUES DANS UN GAZ**
VORRICHTUNG ZUM RÜCKGEWINNEN VON NANOPULVER UND ULTRAFEINEM PULVER AUS EINEM GAS
DEVICE FOR RECOVERING NANOPOWDERS AND ULTRAFINE POWDERS CONTAINED IN A GAS

(30) Priorité: 19.11.2009 FR 0958185
(43) Date de publication de la demande: 26.09.2012
(73) Titulaire: Commissariat à l'Énergie Atomique et aux Énergies Alternatives, 75015 Paris (FR)
(72) Inventeur: MASKROT, Hicham, 91310 MONTLHERY (FR); GUIZARD, Benoît, F-94000 Creteil (FR)
(74) Mandataire: Ilgart, Jean-Christophe
(86) Numéro de dépôt international: PCT/EP2010/067681
(87) Numéro de publication internationale: WO 2011/061224

(56) Documents cités:
- EP-A1- 1 569 293
- WO-A1-2007/068805
- DE-A1-102004 049 850

## Description

### DOMAINE TECHNIQUE

L'invention concerne un dispositif permettant de récupérer des particules nanométriques (< 100 nanomètres), également appelées nanoparticules ou nanopoudres, et des particules submicrométriques (100-500 nanomètres), également appelées particules ou poudres ultrafines, qui seraient contenues dans un gaz.

Par souci de simplification, nous considérerons dans la suite de la description et à titre d'exemple, des nanoparticules.

### ÉTAT DE LA TECHNIQUE ANTÉRIEURE

En raison de leurs propriétés spécifiques, les nanoparticules connaissent un engouement croissant depuis plusieurs années. Les nanoparticules sont en effet utilisées en tant que matière première ou en tant que matériau fini dans des industries diverses, telles que l'aéronautique (en tant que nanocomposites), l'automobile (dans les pneumatiques, la peinture, les catalyseurs), l'énergie (l'énergie nucléaire ou photovoltaïque, la pétrochimie), la cosmétique (en tant qu'agent de structure ou barrière UV), la microélectronique et l'agroalimentaire.

La taille des particules est un facteur pouvant influer fortement sur la toxicité de celles-ci. Ainsi certaines phases réputées inoffensives à l'échelle micrométriques peuvent devenir très toxiques à l'échelle nanométrique.

Le développement de procédés de production de nanoparticules à échelle industrielle, ou simplement le développement de procédés produisant indirectement des nanoparticules (les nanoparticules étant alors des déchets qu'il faut confiner et récupérer), peut donc s'avérer dangereux si aucune précaution n'est prise pour protéger à la fois les personnes ayant la charge des unités de production, de la manipulation et de l'intégration de ces nanoparticules, mais également l'environnement.

Il est donc nécessaire de maitriser la récupération des nanoparticules. Pour cela, il existe trois types de récupération des nanoparticules : la récupération en voie sèche, la récupération en voie liquide et la récupération en voie humide.

Les dispositifs de récupération des nanoparticules en voie sèche fonctionnent généralement avec des procédés de fabrication de nanoparticules en voie gazeuse (c'est-à-dire des procédés dans lesquels les nanoparticules sont produites dans un flux gazeux). Ils comprennent généralement des collecteurs à barrières filtrantes qui stoppent les nanoparticules tout en laissant s'échapper les gaz de procédé. Des dispositifs à cyclones ou des dispositifs électrostatiques peuvent également être utilisés.

Dans ces dispositifs de récupération en voie sèche, la collecte des nanoparticules est réalisée lorsque les collecteurs sont pleins afin de mettre les nanoparticules en sac ou en conteneur.

La collecte en voie sèche présente un risque d'exposition aux nanoparticules très élevé pour les personnels ayant cette tâche. En effet, lors de la collecte, les collecteurs sont ouverts et, du fait de l'importante volatilité des nanoparticules (souvent présentes sous forme agglomérée), celles-ci sont mises en suspension instantanément dans l'air et peuvent donc être aéroportées vers les voies d'entrée du corps humain (narines, bouche, oreilles...).

Un moyen d'assurer la protection des personnels concernés consiste à équiper ceux-ci de combinaisons intégrales et d'appareils respiratoires ayant une capacité de filtration adéquate ou fonctionnant par un apport d'air provenant d'un circuit autonome.

Mais de tels équipements constituent un surcoût important (durée des interventions augmentée et achat de combinaisons, de filtres...). En outre, du fait de leur volatilité, ces nanoparticules peuvent se déposer en différents endroits dans les installations si aucune mesure n'est prise en ce qui concerne leur confinement. Ceci constitue un risque supplémentaire pour les personnels en charge du nettoyage des installations, mais aussi pour l'environnement (pollution des eaux, de l'air et des sols). Les moyens de confinement à mettre ainsi en oeuvre constituent également un surcoût important à la conception des installations, mais aussi au fonctionnement de celles-ci (remplacement de filtres, contrôles).

Les dispositifs de récupération en voie liquide consistent quant à eux à mettre les nanoparticules, présentes dans un gaz, en suspension dans un liquide, pour ensuite récupérer cette suspension.

La récupération en voie humide fonctionne sur le même principe que la récupération en voie liquide, à la différence près qu'au lieu de récupérer une suspension, la suspension est filtrée et on récupère les particules encore humides présentes sur le filtre.

Un exemple d'un dispositif de mise en suspension de particules nanométriques ou submicroniques est décrit dans le document **[1]** référencé à la fin de la description. Dans ce dispositif, le flux de particules à mettre en suspension est envoyé dans un réservoir contenant un liquide. La mise en suspension des particules dans le liquide peut être obtenue par simple bullage en amenant le flux de particules directement dans le liquide à l'aide d'un diffuseur, constitué d'un manchon percé d'une multitude de trous. Cette conception particulière du diffuseur permet de maximiser la surface d'échange entre le flux gazeux contenant les particules et le liquide. La mise en suspension des particules dans le liquide est obtenue en vaporisant le liquide dans le flux gazeux.

Le mode de récupération des nanoparticules en voie liquide ou en voie humide présente moins de risques pour les personnels et l'environnement que le mode de récupération en voie sèche. Cependant, les dispositifs connus de récupération en voie liquide ou en voie humide, et notamment le dispositif décrit dans le document **[1]**, sont peu performants dans le cas d'une production en masse de nanoparticules (à savoir, lorsque le flux de gaz comprend plus de 12.10⁴ particules par litre par minute). En effet, la mouillabilité des nanoparticules n'est alors pas suffisante pour permettre une bonne captation de l'ensemble des particules par le liquide. Une partie des particules se retrouvent donc libre dans le gaz et il devient alors nécessaire d'épurer le gaz (par exemple à l'aide de collecteurs à barrières filtrantes...) afin que les nanoparticules qu'il véhicule ne se retrouvent pas *in fine* dans l'atmosphère. Le confinement de ces nanoparticules comprises dans le gaz entraine un surcout important (durée des interventions augmentée et achat de filtres).

Les inventeurs se sont donc fixé comme but d'améliorer la récupération par voie liquide ou humide des particules de taille nanométrique ou submicrométrique comprises dans un flux gazeux.

### EXPOSÉ DE L'INVENTION

Ce but est atteint grâce à un dispositif de récupération de particules nanométriques ou submicrométriques véhiculées par un gaz par production de suspensions stabilisées de particules nanométriques ou submicrométriques, ledit dispositif comprenant un réservoir qui comprend :
- des moyens d'injection d'au moins un liquide dans le réservoir,
- des moyens d'évacuation des gaz au niveau de la partie supérieure du réservoir après des moyens de filtrage des particules,
- des moyens de sortie de suspensions de particules,
caractérisé en ce que le dispositif comprend en outre une pompe à anneau liquide, destinée à transférer et à disperser tout ou partie des particules nanométriques ou submicrométriques véhiculées par un gaz dans un liquide, la pompe comprenant :
- des moyens d'introduction d'un gaz chargé en particules nanométriques ou submicrométriques dans la pompe,
- des moyens d'injection d'au moins un liquide dans la pompe et
- des moyens d'évacuation d'un mélange comprenant le liquide chargé en particules et le gaz obtenu à l'issue du transfert de particules,
et caractérisé en ce que le réservoir comprend en outre :
- des moyens d'introduction dudit mélange dans le réservoir et
- au moins un transducteur électroacoustique du type pastille piézoélectrique, destiné à être immergé au sein du réservoir dans un liquide, ledit transducteur étant conçu de sorte que les ondes acoustiques créées au niveau dudit transducteur se propagent jusqu'à la surface du liquide dans lequel il est immergé et génèrent un brouillard de gouttelettes de taille micrométrique au dessus de la surface dudit liquide.

Les gouttelettes ont une taille micrométrique, c'est-à-dire un diamètre compris entre 1 et 1000 micromètres, ou inférieure (submicrométrique). De préférence, les gouttelettes ont une taille comprise entre 0,3 et 10 micromètres.

Le liquide dans lequel est immergé ledit au moins un transducteur sera le plus souvent, au début de la mise en fonctionnement du dispositif, un liquide non chargé qui se chargera progressivement en particules au cours du fonctionnement du dispositif.

Selon l'invention, les transducteurs électroacoustique du type pastille piézoélectrique utilisés émettent des ondes ultrasonores de hautes fréquences (de 800 kHz à 3 MHz) et à des puissances élevées (plus de 100 W).

Selon un mode de réalisation particulier, le réservoir est séparé en deux compartiments, le liquide débouchant dans un des compartiments pouvant passer dans l'autre compartiment en passant à travers un filtre, ledit filtre étant conçu pour empêcher le passage des particules présentes dans le liquide, le liquide après son passage à travers le filtre servant à alimenter les moyens d'injection d'au moins un liquide dans la pompe à anneau liquide et/ou les moyens d'injection d'au moins un liquide dans le réservoir.

Avantageusement, les deux compartiments sont situés l'un au dessus de l'autre.

De préférence, dans ce mode de réalisation particulier, ledit au moins un transducteur est positionné au-dessus du filtre, tout en restant en dessous du niveau de l'interface liquide/Air. De préférence, le transducteur est placé à une distance d'environ 10 cm en-dessous de l'interface liquide/air. Par exemple, le volume du compartiment dans lequel se trouve ledit au moins un transducteur et le volume de liquide contenu dans ce compartiment sont tels que le transducteur peut être placé à environ 30 cm au-dessus du filtre, tout en étant à 10 cm en-dessous de l'interface liquide/air.

Selon un mode de réalisation, les moyens d'introduction du mélange dans le réservoir sont positionnés de manière à déboucher au dessus du liquide contenu dans le réservoir dans lequel ledit au moins un transducteur est immergé.

Selon un autre mode de réalisation, les moyens d'introduction du mélange dans le réservoir sont positionnés de manière à déboucher dans le liquide contenu dans le réservoir dans lequel ledit au moins un transducteur est immergé. De préférence, les moyens d'introduction du mélange sont positionnés de telle sorte à déboucher dans le réservoir de manière transverse par rapport au fond du compartiment dans lequel il se trouve ou par rapport au filtre. De préférence, les moyens d'introduction du mélange sont positionnés en dessous dudit au moins un transducteur. De préférence, les moyens d'introduction du mélange sont positionnés le plus bas possible dans le compartiment dans lequel ils se trouvent. Dans ce mode de réalisation, les moyens d'introduction du mélange dans le réservoir comprennent avantageusement un diffuseur constitué d'un manchon percé d'une multitude de trous.

Avantageusement, le dispositif comprend en outre des moyens d'introduction d'un liquide situés dans les moyens d'évacuation des gaz, après les moyens de filtrage.

Avantageusement, le ou les transducteurs électro-acoustiques de type pastille piézoélectrique sont au nombre d'un transducteur par 400 mL de liquide chargé en particules présent au dessus du transducteur lorsque la hauteur de liquide au dessus du ou des transducteurs est de 10 cm. Cette valeur d'un transducteur par 400 mL de liquide est à adapter en fonction des pastilles piézoélectriques choisies. Par exemple, il existe des pastilles de fabrication chinoise (modèle M165D25 de la marque Pro-Wave) qui fonctionnent de manière optimale lorsqu'elles sont immergées sous une hauteur de liquide de 45 mm et produisent alors 400 cc/h de gouttelettes. On peut également utiliser les pastilles de la marque Singceramics, modèle AW16Y20120F2 ou AW16Y20120F2 (1,6 MHz et 2,4 MHz).

### BRÈVE DESCRIPTION DES DESSINS

L'invention sera mieux comprise et d'autres avantages et particularités apparaîtront à la lecture de la description qui va suivre, donnée à titre d'exemple non limitatif, accompagnée des figures annexées parmi lesquelles :
- la figure 1 représente un premier exemple d'un dispositif de récupération de particules selon l'invention, le dispositif fonctionnant en circuit fermé et/ou semi-ouvert, sans filtration ;
- la figure 2 représente un second exemple d'un dispositif de récupération de particules selon l'invention, le dispositif fonctionnant en circuit fermé et/ou semi-ouvert, avec filtration tangentielle ;

- la figure 3 représente un troisième exemple d'un dispositif de récupération de particules selon l'invention, le dispositif fonctionnant en circuit fermé et/ou semi-ouvert, avec filtration frontale.
- la figure 4 est un graphique des mesures de transmission dans l'UV et le Visible de suspensions ou solutions récupérées en différents endroits du dispositif de récupération selon l'invention.

### EXPOSÉ DÉTAILLÉ DE MODES DE RÉALISATION PARTICULIERS

Le dispositif de récupération selon l'invention permet la récupération directe en voie liquide ou en voie humide de quantités importantes de particules de taille nanométrique ou submicrométrique en optimisant la mise en suspension des particules dans un liquide.

Dans le dispositif selon l'invention, la mise en suspension des particules est optimisée en augmentant la surface de contact entre les particules nanométriques ou submicrométriques et le liquide de suspension.

Cette optimisation est obtenue, dans un premier temps, en faisant passer le flux de particules dans une pompe à anneau liquide (également connue sous le nom de pompe à vide à anneau liquide ou compresseur à anneau liquide).

On rappelle qu'une pompe à anneau liquide comporte un corps cylindrique (appelé stator), dans lequel tourne une roue à ailettes (rotor) selon un axe de rotation excentré par rapport à l'axe de rotation du stator, et deux disques placés de part et d'autre du stator, comprenant chacun une ouverture (ou lumière) par laquelle le gaz peut pénétrer (lumière d'aspiration) dans le stator ou s'échapper (lumière de refoulement). La pompe à anneau liquide comprend en outre une entrée de liquide, une entrée de gaz et une sortie du mélange liquide et gaz. En cours de fonctionnement, le liquide est plaqué contre la périphérie du stator par la force centrifuge reçue de la roue à ailettes et forme un anneau concentrique au stator. Le liquide au sein du stator permet ainsi d'assurer l'étanchéité entre le rotor et le stator. Comme la roue est excentrée, des capacités de volumes variables sont générées entre deux ailettes et l'anneau liquide. Lorsque la roue tourne, il se crée une dépression au sein du stator au niveau de la lumière d'aspiration et le gaz est aspiré et mélangé avec le liquide (phase d'impaction), puis, arrivé au niveau de la lumière de refoulement, il se crée une compression et le gaz comprimé et le liquide sont refoulés à l'extérieur du stator (phase de compression).

Dans le dispositif selon l'invention, la pompe à anneau liquide pompe, à pression contrôlée, un flux de gaz véhiculant des particules hors d'une enceinte de production de particules (réacteur de synthèse ou unité de traitement des effluents, par exemple) et l'amène dans le stator. Puis, le flux de gaz véhiculant les particules entre en contact avec l'anneau liquide, qui fait office de mur liquide sur lequel les particules viennent s'impacter. Ainsi, dans la pompe à anneau liquide, on force le contact entre les particules et le liquide par des cycles de compression/impaction.

A la sortie de la pompe à anneau liquide, les nanoparticules sont majoritairement en suspension dans le liquide, mais il peut subsister des traces de particules dans le gaz.

L'optimisation de la mise en suspension des particules est alors obtenue, dans un second temps, en faisant passer les particules encore présentes dans le gaz dans un brouillard de microgouttelettes.

Plus précisément, le mélange obtenu à la sortie de la pompe à anneau liquide, comprenant le gaz et le liquide chargé en nanoparticules, est envoyé dans un réservoir comprenant au moins un transducteur électro-acoustique du type pastille piézoélectrique. La ou les pastilles sont immergées dans un liquide et permettent de générer un brouillard dense de gouttelettes de tailles micrométriques ou inférieures dans le réservoir. De préférence, la taille des microgouttelettes est comprise entre 0,3 et 10 micromètres.

La dimension des gouttelettes dépend essentiellement de la fréquence des ultrasons et des caractéristiques physiques (tension superficielle et densité) du liquide dans lequel sont immergées les pastilles (voir le document **[2]**). Par exemple, les tailles des gouttelettes sont de 0,3 µm, 1 à 2 µm, 4 à 5 µm et 6 à 8 µm respectivement pour des fréquences de vibration de 3 MHz, 2,1 Mhz, 1,3 MHz et 800 kHz.

Le brouillard de gouttelettes a pour fonction de piéger les dernières nanoparticules non captées lors du passage dans la pompe à anneau liquide et présentes dans le gaz. La captation des nanoparticules sera d'autant plus efficace que les gouttelettes seront fines et le brouillard dense. En effet, il faut favoriser la probabilité de collision entre une goutte et une nanoparticule solide. Cette probabilité dépend essentiellement de la mobilité (vitesse) des particules (liquide et gaz) et de la concentration de particules (densité ou quantité de gouttes).

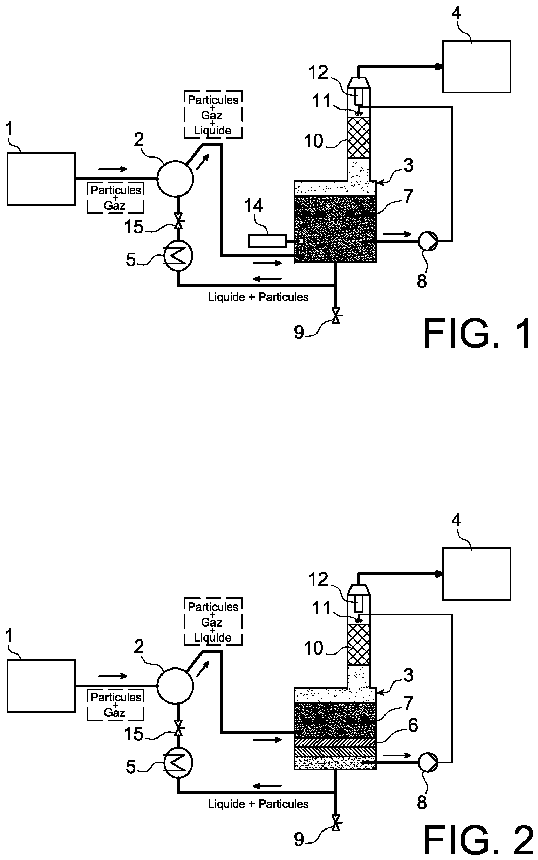

Le mélange comprenant le gaz et le liquide chargé sortant de la pompe à anneau liquide débouche soit directement dans le liquide présent dans le réservoir (figures 1, 2, 3) (il se produit alors un bullage et le gaz chargé de traces de particules s'élève dans le brouillard), soit au dessus du liquide, directement dans le brouillard (non représenté).

L'utilisation de pastilles piézoélectriques permet de générer un brouillard homogène et dense : la distribution de la taille des gouttelettes est en effet mono disperse et étroite. A cet égard, il est possible de générer 216 cm³/h d'aérosol avec une seule pastille, disposée dans 400 mL de liquide, sans avoir à ajouter un gaz d'atomisation, qui aurait pour effet de diluer l'aérosol. L'émission ou la quantité de brouillard généré va dépendre de la puissance ultrasonore (dans notre cas, elle peut atteindre 100 W). Ainsi, en adaptant le nombre de pastilles piézoélectriques à la quantité de liquide présent dans le réservoir, le brouillard obtenu peut recouvrir la totalité de la surface du liquide, ce qui est particulièrement important dans le cas où le mélange comprenant le gaz et le liquide chargé débouche dans le réservoir directement dans le liquide (bullage).

La densité du brouillard dépend de la hauteur de liquide présent au dessus des pastilles et de la puissance des ultrasons. De préférence, la hauteur de liquide est de 10 cm. En statique, c'est à dire sans gaz porteur, la hauteur de ce brouillard est de plusieurs centimètres (environ 10 cm). A titre d'exemple, en pulvérisation ultrasonore et avec une pastille fonctionnant à 1 Mhz, on peut atteindre une densité de l'ordre de 18 mL par litre de gaz, ce qui est 14 fois plus grand que celle obtenue par pulvérisation pneumatique (voir le document **[3]**).

Afin d'augmenter la probabilité de contact entre les gouttelettes et les particules, il est possible de faire passer le mélange aérosol liquide (microgouttelettes) et aérosol solide (nanoparticules) à travers un système de type "serpentin" ayant une longueur d'au moins 1 mètre et un diamètre de l'ordre de 10 mm. Ce serpentin a pour autre fonction de faire condenser les microgouttelettes chargées en nanoparticules. Les parois du serpentin peuvent éventuellement être refroidies afin d'améliorer la condensation à leur surface. Le serpentin peut par exemple être en métal ou en céramique.

Nous allons à présent décrire trois variantes de réalisation du dispositif selon l'invention. On précise que les éléments identiques dans les différentes variantes sont désignés par des références identiques.

Dans les trois exemples de réalisation, les nanoparticules sont produites par un procédé de synthèse en phase gazeuse (pyrolyse laser, plasma, évaporation-condensation, combustion...) dans un réacteur de synthèse 1 par exemple. Le flux de gaz véhiculant les particules est conduit dans une pompe à anneau liquide 2, qui est alimentée par un liquide, par exemple de l'eau. Le flux de particules subit une phase d'impaction et une phase de compression dans la pompe à anneau liquide et on récupère en sortie de la pompe un mélange comprenant le gaz, les particules et le liquide, les particules étant majoritairement véhiculées par le liquide.

Ce mélange est conduit dans un réservoir 3 comprenant un liquide, par exemple de l'eau, et éventuellement un dispersant, par exemple 1 mL de dolapix PC21 de chez Zschimmer and Schwartz, et des pastilles piézoélectriques 7 disposées dans le réservoir de manière à être immergées dans le liquide. Par exemple, elles sont disposées à 30 cm du fond du réservoir. De préférence, le volume de liquide compris dans le réservoir est calculé de manière à ce que les pastilles soient recouvertes par environ 10 cm de liquide (valeur calculée en prenant comme référence des pastilles fournies par la société RBI (puissance de 0 à 100 W et fréquence de 800 kHz à 3 MHz)).

Les pastilles sont excitées de manière à former un brouillard de microgouttelettes au dessus du liquide présent dans le réservoir.

Dans ces exemples de réalisation, le mélange issu de la pompe à anneau liquide débouche dans le liquide présent dans le réservoir. Il se produit un bullage lorsque le gaz s'échappe du liquide et le gaz se retrouve en contact avec les microgouttelettes du brouillard directement à la sortie du liquide. En variante, le mélange peut déboucher au dessus du liquide.

Pour s'échapper du réservoir, le gaz est obligé de passer à travers le brouillard.

Une fois qu'il a traversé le brouillard, le gaz est évacué du réservoir en passant à travers un système destiné à séparer le gaz du liquide chargé.

Ce système de séparation comprend ici une colonne de lavage équipée d'un condensateur (non représenté) et d'un système de filtration multi étagé 10 comprenant au moins deux types de filtres ayant des porosités différentes choisies de manière à séparer le gaz et le liquide. On précise que le nombre de filtres utilisés dépend du niveau de sécurité que l'on souhaite instaurer. On peut donc tout à fait utiliser plus de deux filtres ou séparateurs gaz/liquide chargé.

Le condensateur permet la condensation des microgouttelettes chargées en nanoparticules. Le condensateur peut par exemple être un serpentin. Le premier filtre peut être un "matelas dévisiculeur" en acier inox, céramique ou plastique. Les gouttelettes viennent coalescer dans le matelas. L'efficacité va dépendre de la charge des gouttelettes, de l'épaisseur et du type de matelas.

Après son passage à travers le système de filtration, on peut éventuellement laver le gaz en plaçant une buse de lavage 11 à la sortie du système de filtration.

Puis le gaz passe éventuellement à travers des filtres qui vont permettre d'empêcher tout éventuel résidu de nanoparticules de sortir de l'enceinte avec les gaz de sortie. Dans cet exemple de réalisation et dans les suivants, les filtres placés en bout de colonne sont des filtres absolus métalliques chauffés 12. Le chauffage permet d'éviter une éventuelle condensation de liquide non chargé sur les filtres. En fonctionnement normal, aucune particule ne doit se déposer sur ces derniers filtres.

Un échangeur thermique 5 peut être associé au système de filtration afin de limiter l'élévation de la température.

Le dispositif selon l'invention peut éventuellement être associé à un système de pompage 4 facilitant l'aspiration des gaz hors du réservoir.

La différence entre les trois exemples de réalisation se situe au niveau du réservoir et de l'alimentation en liquide de la pompe à anneau liquide.

Selon un premier exemple de réalisation représenté dans la figure 1, le réservoir 3 est équipé d'une évacuation située dans le fond du réservoir et d'un viscosimètre 14 intégré au réservoir. Tant que la viscosité de la suspension est en dessous d'une valeur seuil, la suspension est évacuée du réservoir et est redirigée vers la pompe à anneau liquide pour alimenter en liquide ladite pompe. La suspension qui est évacuée du réservoir peut également servir à alimenter autre chose que la pompe à anneau liquide ; par exemple, dans la figure 1, la suspension qui est évacuée du réservoir sert également à alimenter la buse de lavage 11 ; on utilise une pompe 8, par exemple une pompe péristatique, afin de pomper le liquide présent dans le réservoir et à alimenter la buse de lavage 11. Lorsque la viscosité de la suspension atteint un seuil fixé, un liquide d'appoint est injecté dans le circuit à travers une vanne de régulation 15 afin de maintenir la viscosité de la suspension en dessous de la valeur seuil. En effet, les pastilles piézoélectriques et la pompe à anneau liquide ne fonctionnent plus correctement lorsque la viscosité de la suspension dépasse la valeur seuil. La valeur seuil dépendra donc des pastilles utilisées et des caractéristiques de la pompe. La vanne 9 permet de récupérer la suspension en cours d'expérience.

Il est bien entendu que la vitesse d'évacuation de la suspension et le débit d'appoint sont adaptés de manière à ce qu'il y ait toujours du liquide dans le réservoir lorsque le dispositif est en cours de fonctionnement.

Par ailleurs, il est possible d'utiliser un échangeur thermique 5 afin de limiter l'élévation de la température au sein du dispositif.

Selon un deuxième et un troisième exemples de réalisation, la suspension présente dans le réservoir est filtrée avant d'être renvoyée vers la pompe à anneau liquide pour l'alimenter en liquide ou pour alimenter la buse de lavage 11.

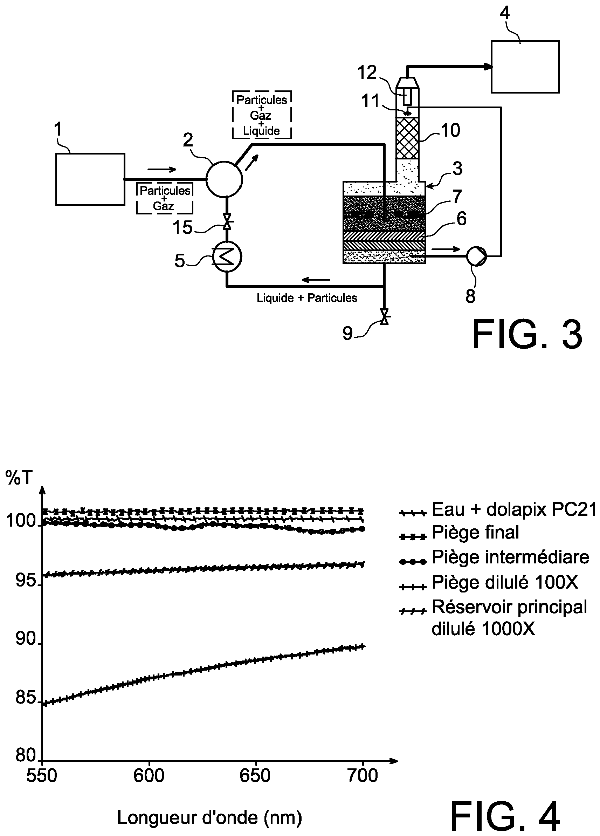

Le réservoir 3 peut ainsi être équipé d'un ou plusieurs filtres 6 permettant la filtration de la suspension, comme représenté dans les figures 2 et 3. La filtration de la suspension peut se faire de manière tangentielle (figure 2) ou de manière frontale (figure 3).

Dans les figures 2 et 3, un filtre divise le réservoir 3 en deux compartiments situés l'un au dessus de l'autre, les pastilles piézoélectriques étant disposées au dessus du filtre.

Nous allons à présent décrire un exemple de récupération de nanoparticules de SiC dans un média liquide (par exemple de l'eau et un dispersant) par production d'une suspension stabilisée de SiC utilisant le dispositif de récupération selon l'invention.

Par souci de simplification, le dispositif utilisé fonctionne en circuit fermé non filtré (figure 1). Le dispositif comprend donc une pompe à anneau liquide 2, un réservoir 3 équipé de pastilles piézoélectriques 7, un générateur radiofréquence permettant de faire fonctionner les pastilles piézoélectriques et un condensateur. On rajoute trois pièges qui vont jouer le rôle des deux filtres du système de filtrage utilisés dans la figure 1. Le remplacement des deux filtres par trois pièges est fait dans l'optique de mieux visualiser la présence ou l'absence de nanoparticules à ces différents stades. On rappelle que le nombre de filtres utilisés dépend du niveau de sécurité que l'on souhaite instaurer. Le flux de nanoparticules est par exemple produit par un générateur de poudres nanométriques, qui est relié à la pompe à anneau liquide.

Pour réaliser l'expérience, les conditions opératoires sont les suivantes.

Le générateur de poudres nanométriques est paramétré de manière à produire 75g de nanoparticules de SiC ayant un diamètre compris entre 35 nm et 37 nm selon un rythme de 150 g/h de nanoparticules de SiC. Les nanoparticules sont véhiculées par un gaz vecteur, par exemple de l'argon, et le flux ainsi produit est injecté dans la pompe à anneau liquide. Le débit d'entrainement de l'argon est ici fixé à 25 L/min et la concentration en particules est par exemple de 0,1 g de particules par litre d'argon.

Le liquide qui est injecté dans la pompe est par exemple un solvant composé de 4 litres d'eau et de 1 mL de dispersant, par exemple du Dolapix PC21. L'ajout du dispersant permet d'améliorer la dispersion des nanopoudres dans la suspension. Le choix du ou des dispersants s'effectue en fonction de la nature du liquide et de la poudre formant la suspension. La dispersion peut également être améliorée en agitant la suspension à l'aide d'un barreau magnétique.

Le réservoir est une enceinte cylindrique de 8 cm de diamètre et 15 cm de haut. Il comprend par exemple un solvant constitué de 4L d'eau et de 1 mL de dispersant. Sous ce volume de solvant sont placées 10 pastilles piézoélectriques à égale distance les unes des autres. Dans notre exemple de réalisation, les 10 pastilles produisent ensemble plus de 216 cm³/h d'aérosol liquide. Les pastilles sont par exemple des pastilles de la société RBI (puissance de 0 à 100 W et fréquence de 800 kHz à 3 MHz). La fréquence des pastilles est ici de 800 kHz, soit une taille de gouttelettes comprise entre 6 et 8 micromètres.

Le mélange gaz et liquide chargé qui ressort de la pompe à anneau liquide est dirigé directement dans le brouillard présent dans le réservoir.

On précise que la température dans le réservoir est de 25°C et la pression est de 999 mbar.

Après environ dix minutes de fonctionnement, on constate que le solvant présent dans le réservoir se charge en particules.

Les particules présentes dans le gaz sont happées par les gouttelettes du brouillard. Les gouttelettes viennent se condenser sur les parois du condensateur et on observe alors la condensation des gouttelettes chargée en nanopoudres.

Une partie des gouttelettes chargées n'a pas le temps de se condenser sur les parois du condenseur et se retrouve piégée par le premier filtre (premier piège), qui consiste ici en une enceinte comprenant un liquide et dans lequel le gaz est mis à buller. L'eau du piège est troublée par la présence de nanopoudres en suspension, contrairement aux deux pièges suivant (qui sont placés après le premier piège) qui restent limpides.

Au bout de 30 minutes de fonctionnement, on a injecté les 75 grammes de nanopoudres de SiC en continu dans le dispositif.

La figure 4 présente des mesures de transmission dans l'UV et le Visible des suspensions ou solutions récupérées au niveau du réservoir 3 (dilué 1000 fois) et de chacun des trois pièges (la solution récupérée au niveau du premier piège étant diluée 100 fois avant de mesurer sa transmission), la transmission du mélange eau + dolapix PC21 qui est introduit dans la pompe à anneau liquide est également présentée. La valeur de la transmission à 100 % (+/- 1) met en évidence l'absence de particules dans le deuxième et le troisième pièges (respectivement le piège intermédiaire et le piège final). Ce résultat démontre ainsi l'efficacité du dispositif de récupération selon l'invention.

Par comparaison, nous avons réalisé la même expérience en injectant 75 g de nanoparticules de SiC dans de l'argon selon un débit de 150 g/h dans un dispositif tel que décrit dans le document **[1]** et qui sert de dispositif de référence, à savoir un dispositif comportant une enceinte cylindrique identique (même dimensions) à celle utilisée dans notre expérience, le flux de particules étant envoyé dans un solvant comprenant 4L d'eau et 1mL de dispersant, par exemple du Dolapix PC21, les particules étant dispersées par un barreau ultrasonore. Les conditions expérimentales de flux et de nature de gaz vecteur sont identiques à celles utilisées dans notre expérience.

Alors qu'on constate la présence de particules dans les trois pièges du dispositif de référence et à la sortie de ces pièges (c'est-à-dire dans l'atmosphère), aucun dépôt de particules n'est détecté dans les second et troisième pièges du dispositif selon l'invention.

La conception particulière du dispositif selon l'invention nous permet donc effectivement de récupérer plus de nanoparticules dans la suspension du fait qu'on améliore la mouillabilité des nanoparticules en augmentant la surface de contact entre les nanoparticules et le liquide. On optimise ainsi la mise en suspension des particules lors de leur production en masse.

Le dispositif de récupération selon l'invention présente de nombreux avantages.

Il permet de piéger de façon très efficace les nanoparticules issues de différents procédés ou installations industrielles.

De plus, le dispositif selon l'invention permet d'élaborer des suspensions stables de nanoparticules, ce qui est particulièrement appréciable étant donné que la réalisation de suspensions stabilisées est particulièrement recherchée. En effet, le plus souvent, la mise en oeuvre ou le conditionnement des nanopoudres passent par une étape de mise en suspension des nanoparticules dans des solvants et des formulations très variés. L'élaboration et la stabilisation de ces suspensions est donc une étape clef de la mise en oeuvre ou du conditionnement des nanoparticules. Par exemple, dans les crèmes solaires minérales, la qualité dans le temps du produit va dépendre, entre autres, de la bonne dispersion de la phase active (le plus souvent des nanoparticules d'oxyde de titane TiO₂). Parmi les différents procédés d'élaboration de nanocomposites, on peut citer le procédé d'infiltration par électrophorèse EPI. Celui-ci requiert la préparation de suspensions de nanoparticules qui doivent présenter des propriétés spécifiques notamment en termes de stabilité, de viscosité, de mobilité et de concentrations en nanopoudres. Dans certains cas, des traitements de surface des nanopoudres sont nécessaires pour leur mise en suspension. L'optimisation des suspensions de nanopoudres est également primordiale dans des procédés de microélectronique dérivés des technologies de l'imprimerie ou « jet d'encre » telles que le « roll to roll », le « microcontact printing » ou encore le « stamp printing » (circuit imprimé, cellule photovoltaïques (« nano-ink »), écrans plats...). D'autre part, la mise en suspension de nanopoudres est un gage de sécurité au travail.

Une fois récupérée, la suspension de nanoparticules peut par la suite être envoyée vers un système de granulation (atomisation-séchage ou freeze-drying), vers un système permettant la fonctionnalisation des nanoparticules (plasma froid par exemple) ou encore vers un dispositif de caractérisation (granulométrie, turbidimètre, viscosimètre, spectromètre...).

### BIBLIOGRAPHIE

**[1]** WO 2007/068805 A1
**[2]** Bisa K. et al., « Zerstäubung von Flüssigkeiten mit Ultraschall », Siemens Z., 28 (8), p 341-347 (1954)
**[3]** J. Spitz et al., « La pulvérisation par ultrasons appliquée à la spectrométrie d'absorption atomique », Applied optics, 7 (7), p 1345-1349 (1968).

## Revendications

1. Dispositif de récupération de particules nanométriques ou submicrométriques véhiculées par un gaz par production de suspensions stabilisées de particules nanométriques ou submicrométriques, ledit dispositif comprenant un réservoir (3) qui comprend :
- des moyens d'injection d'au moins un liquide dans le réservoir,
- des moyens d'évacuation des gaz au niveau de la partie supérieure du réservoir après des moyens de filtrage (10) des particules,
- des moyens de sortie (9) de suspensions de particules,
**caractérisé en ce que** le dispositif comprend en outre une pompe à anneau liquide (2), destinée à transférer et à disperser, dans un liquide, tout ou partie des particules nanométriques ou submicrométriques véhiculées par un gaz, la pompe comprenant :
- des moyens d'introduction d'un gaz chargé en particules nanométriques ou submicrométriques dans la pompe,
- des moyens d'injection d'au moins un liquide dans la pompe et
- des moyens d'évacuation d'un mélange comprenant le liquide chargé en particules et le gaz obtenu à l'issue du transfert de particules,
et **caractérisé en ce que** le réservoir comprend en outre :
- des moyens d'introduction dudit mélange dans le réservoir et
- au moins un transducteur électroacoustique du type pastille piézoélectrique (7), destiné à être immergé au sein du réservoir dans un liquide, pour générer un brouillard de gouttelettes de taille micrométrique au dessus de la surface dudit liquide par production d'ondes acoustiques qui se propagent jusqu'à la surface dudit liquide.

2. Dispositif de récupération de particules manométriques ou submicrométriques selon la revendication 1, dans lequel le réservoir (3) est séparé en deux compartiments, le liquide débouchant dans un des compartiments pouvant passer dans l'autre compartiment en passant à travers un filtre (6), ledit filtre étant conçu pour empêcher le passage des particules présentes dans le liquide, le liquide après son passage à travers le filtre servant à alimenter les moyens d'injection d'au moins un liquide dans la pompe à anneau liquide et/ou les moyens d'injection d'au moins un liquide dans le réservoir.

3. Dispositif de récupération de particules nanométriques ou submicrométriques selon la revendication 2, dans lequel les deux compartiments sont situés l'un au dessus de l'autre.

4. Dispositif de récupération de particules nanométriques ou submicrométriques selon la revendication 2, dans lequel ledit au moins un transducteur (7) est positionné sur le filtre (6).

5. Dispositif de récupération de particules nanométriques ou submicrométriques selon la revendication 1, dans lequel les moyens d'introduction du mélange dans le réservoir (3) sont positionnés de manière à déboucher au dessus du liquide contenu dans le réservoir dans lequel ledit au moins un transducteur (7) est immergé.

6. Dispositif de récupération de particules nanométriques ou submicrométriques selon la revendication 1, dans lequel les moyens d'introduction du mélange dans le réservoir sont positionnés de manière à déboucher dans le liquide contenu dans le réservoir dans lequel ledit au moins un transducteur (7) est immergé.

7. Dispositif de récupération de particules nanométriques ou submicrométriques selon la revendication 6, dans lequel les moyens d'introduction du mélange dans le réservoir (3) comprennent un diffuseur constitué d'un manchon percé d'une multitude de trous.

8. Dispositif de récupération de particules nanométriques ou submicrométriques selon la revendication 1, comprenant en outre des moyens d'introduction d'un liquide situés dans les moyens d'évacuation des gaz, après les moyens de filtrage.

## Patentansprüche

1. Vorrichtung zur Gewinnung von nanometrischen oder submikrometrischen Partikeln, transportiert durch ein Gas, durch Herstellung von stabilisierten Suspensionen von nanometrischen oder submikrometrischen Partikeln, wobei die Vorrichtung einen Behälter (3) umfasst, welcher umfasst:
- Injektionsmittel von wenigstens einer Flüssigkeit in den Behälter,
- Evakuierungsmittel von Gasen in Höhe des oberen Teils des Behälters nach Filtermitteln (10) für die Partikel,
- Auslassmittel (9) für Partikelsuspensionen,
**dadurch gekennzeichnet, dass** die Vorrichtung außerdem eine Flüssigkeitsringpumpe (2) umfasst, bestimmt zum Überführen und zum Verteilen von nanometrischen oder submikrometrischen Partikeln, welche von einem Gas transportiert werden, ganz oder teilweise in einer Flüssigkeit, wobei die Pumpe umfasst:
- Einführungsmittel für ein Gas geladen mit nanometrischen oder submikrometrischen Partikeln in die Pumpe,
- Injektionsmittel von wenigstens einer Flüssigkeit in die Pumpe, und
- Evakuierungsmittel eines Gemisches umfassend die Flüssigkeit geladen mit Partikeln und das Gas erhalten als Ergebnis der Überführung von Partikeln,
und **dadurch gekennzeichnet, dass** der Behälter außerdem umfasst:
- Einführungsmittel des Gemischs in den Behälter, und
- wenigstens einen elektroakustischen Wandler vom piezoelektrischen Schichttyp (7), vorgesehen, dass er innerhalb des Behälters in eine Flüssigkeit eingetaucht ist, zur Erzeugung eines Tröpfchennebels in mikrometrischer Größe oberhalb der Oberfläche der Flüssigkeit durch Bilden von akustischen Wellen, die sich bis zur Oberfläche der Flüssigkeit ausbreiten.

2. Vorrichtung zur Gewinnung von nanometrischen oder submikrometrischen Partikeln gemäß Anspruch 1, in welcher der Behälter (3) in zwei Kompartimente aufgeteilt ist, wobei die in einem der Kompartimente vorhandene Flüssigkeit in das andere Kompartiment übergehen kann, wobei sie durch ein Filter (6) geht, wobei das Filter konzipiert ist, um die Passage von Partikeln, welche in der Flüssigkeit vorhanden sind, zu verhindern, wobei die Flüssigkeit nach ihrer Passage durch das Filter dient, um die Injektionsmittel von wenigstens einer Flüssigkeit in die Flüssigkeitsringpumpe und/oder die Injektionsmittel von wenigstens einer Flüssigkeit in den Behälter zu versorgen.

3. Vorrichtung zur Gewinnung von nanometrischen oder submikrometrischen Partikeln gemäß Anspruch 2, in welcher die beiden Kompartimente eines über dem anderen angeordnet sind.

4. Vorrichtung zur Gewinnung von nanometrischen oder submikrometrischen Partikeln gemäß Anspruch 2, in welcher der wenigstens eine Wandler (7) über dem Filter (6) angeordnet ist.

5. Vorrichtung zur Gewinnung von nanometrischen oder submikrometrischen Partikeln gemäß Anspruch 1, in welcher die Einführungsmittel des Gemischs in den Behälter (3) so angeordnet sind, dass sie oberhalb der in dem Behälter enthaltenen Flüssigkeit, in welcher der wenigstens eine Wandler (7) eingetaucht ist, münden.

6. Vorrichtung zur Gewinnung von nanometrischen oder submikrometrischen Partikeln gemäß Anspruch 1, in welcher die Einführungsmittel des Gemischs in den Behälter so angeordnet sind, dass sie in der in dem Behälter enthaltenen Flüssigkeit, in welcher der wenigstens eine Wandler (7) eingetaucht ist, münden.

7. Vorrichtung zur Gewinnung von nanometrischen oder submikrometrischen Partikeln gemäß Anspruch 6, in welcher die Einführungsmittel des Gemischs in den Behälter (3) einen Diffusor umfassen, gebildet aus einer gelochten Hülse mit einer Vielzahl von Löchern.

8. Vorrichtung zur Gewinnung von nanometrischen oder submikrometrischen Partikeln gemäß Anspruch 1, umfassend außerdem Einführungsmittel einer Flüssigkeit, angeordnet in den Evakuierungsmitteln von Gasen nach den Filtermitteln.

## Claims

1. Device for recovering nanometer or sub-micron particles carried by a gas by generating stabilized suspensions of nanometer or sub-micron particles, said device including a vessel (3) which comprises:
- means for injecting at least one liquid into the vessel,
- gas discharge means in the upper portion of the vessel after particle filtering means (10),
- particle suspension outlet means (9),
**characterised in that** the device further comprises a liquid ring pump (2), intended to transfer and disperse, in a liquid, all or part of the nanometer or sub-micron particles carried by a gas, the pump including:
- means for introducing a gas laden with nanometer or sub-micron particles into the pump,
- means for injecting at least one liquid into the pump and
- means for discharging a mixture comprising the liquid laden with particles and the gas obtained at the end of the transfer of particles,
and **characterised in that** the vessel further comprises:
- means for introducing said mixture into the vessel and
- at least one electro-acoustic transducer of the piezoelectric pellet type (7), intended to be immersed within the vessel in a liquid, to generate a fog of micron-sized droplets above the surface of the liquid by production of acoustic waves that propagate up to the surface of the liquid.

2. Device for recovering nanometer or sub-micron particles according to claim 1, in which the vessel (3) is separated into two compartments, the liquid emerging into one of the compartments being able to pass into the other compartment by passing through a filter (6), said filter being designed to prevent the passage of the particles present in the liquid, the liquid after its passage through the filter serving to supply the means for injecting at least one liquid into the liquid ring pump and/or the means for injecting at least one liquid into the vessel.

3. Device for recovering nanometer or sub-micron particles according to claim 2, in which the two compartments are situated one above the other.

4. Device for recovering nanometer or sub-micron particles according to claim 2, in which said at least one transducer (7) is positioned on the filter (6).

5. Device for recovering nanometer or sub-micron particles according to claim 1, in which the means for introducing the mixture into the vessel (3) are positioned so as to emerge above the liquid contained in the vessel in which said at least one transducer (7) is immersed.

6. Device for recovering nanometer or sub-micron particles according to claim 1, in which the means for introducing the mixture into the vessel are positioned so as to emerge into the liquid contained in the vessel in which said at least one transducer (7) is immersed.

7. Device for recovering nanometer or sub-micron particles according to claim 6, in which the means for introducing the mixture into the vessel (3) include a diffuser constituted of a sleeve pierced by a multitude of holes.

8. Device for recovering nanometer or sub-micron particles according to claim 1, further including means for introducing a liquid situated in the means for discharging the gases, after the filtering means.
